# EUROPÄISCHE PATENTSCHRIFT

(11) **EP 3 107 192 B1**
(45) Veröffentlichungstag und Bekanntmachung des Hinweises auf die Patenterteilung: **13.11.2019**
(21) Anmeldenummer: 15172427.5
(22) Anmeldetag: 16.06.2015
(51) Int. Cl.: H02K 1/27, F04D 19/04, F04D 25/06, F16D 1/06, F16D 1/076, F04B 37/14, F04C 29/00

(54) **VAKUUMPUMPE**
VACUUM PUMP
POMPE À VIDE

(43) Veröffentlichungstag der Anmeldung: 21.12.2016
(73) Patentinhaber: Pfeiffer Vacuum GmbH, 35614 Aßlar (DE)
(72) Erfinder: Bergmann, Gabriel, 35039 Marburg (DE); Wagner, Jürgen, 57629 Müschenbach (DE)
(74) Vertreter: Knefel, Cordula

(56) Entgegenhaltungen:
- EP-A1- 2 829 734
- EP-B1- 1 265 338
- DE-A1-102009 026 287
- DE-T2- 69 625 401
- DE-U1-202009 007 544
- JP-A- S6 412 123

## Beschreibung

Die Erfindung betrifft eine Vakuumpumpe, insbesondere Turbomolekularpumpe oder Vorvakuumpumpe für eine Turbomolekularpumpe, umfassend wenigstens einen Pumpmechanismus zum Pumpen eines Gases durch die Vakuumpumpe und einen, insbesondere als Synchronmotor ausgebildeten Elektromotor zum Antreiben des Pumpmechanismus, wobei der Elektromotor einen Stator und einen mit dem Stator zusammenwirkenden um eine Drehachse drehbaren Rotor aufweist, wobei der Rotor einen aus wenigstens einem Paket von Stahlblechen gebildeten Kern und Permanentmagnete aufweist, die um die Drehachse herum im Inneren des Kerns angeordnet sind, wobei der aus dem wenigstens einen Paket aus Stahlblechen gebildete Kern eine Aufnahmeöffnung für die formschlüssige Aufnahme des Rotors aufweist.

Eine derartige Vakuumpumpe ist aus der EP 1 265 338 B1 bekannt.

Aus der Praxis ist bekannt, Bleche, insbesondere Stahlbleche zu einem Paket zusammenzufassen, in denen Permanentmagnete angeordnet werden, die wiederum um die Drehachse herum im Inneren des Kerns angeordnet sind. Der Rotor weist hierbei einen aus dem Paket von Stahlblechen gebildeten Kern und Permanentmagnete auf.

Das Paket von Stahlblechen weist eine Aufnahmeöffnung für den Rotor auf. Aus dem Stand der Technik ist hierbei bekannt, eine Passfederverbindung vorzusehen. Diese aus der Praxis bekannte Passfederverbindung weist den Nachteil auf, dass eine Unwucht vorhanden ist durch das lose Element der Passfeder. Darüber hinaus tritt eine Vielzahl von Toleranzen bei dieser Art der Verbindung auf, was sich ebenfalls nachteilig auf die Laufruhe des Rotors auswirkt. Pumpen mit schnell laufenden Rotoren weisen Umdrehungszahlen von mehreren 10.000 Umdrehungen pro Minute auf, so dass eine Laufruhe zwingend erforderlich ist.

Wird eine Passfederverbindung zu Wartungszwecken gelöst, stellen sich neue Positionen der Bauteile ein, was sich ebenfalls nachteilig auf den Betrieb der Vakuumpumpe auswirkt.

Eine derartige Vakuumpumpe ist auch aus der DE 696 25 401 T2 bekannt.

Zum Stand der Technik (JP S64 12123 A) gehört eine Vakuumpumpe mit einem Pump-Rotor und einer Rotorwelle sowie einem Elektromotor zum Antreiben des Pumpmechanismus. Der Elektromotor-Rotor weist einen Kern auf und Permanentmagnete, die um eine Drehachse herum im Inneren des Kerns angeordnet sind, wobei der Kern eine Aufnahmeöffnung für die formschlüssige Aufnahme des Rotors aufweist und die Aufnahmeöffnung für die Aufnahme der Rotorwelle eine von einem Vollkreis abweichende Form aufweist.

Diese zum Stand der Technik gehörende Vakuumpumpe kann ebenfalls weiter verbessert werden hinsichtlich der Laufruhe des Rotors.

Weiterhin gehört zum Stand der Technik (EP 2 829 734 A1) eine Vakuumpumpe, bei der zwischen dem Motorstator und dem Rotor ein Zwischenraum vorgesehen ist und wobei ein Gasweg an dem Zwischenraum vorbeiführt. Gemäß dieser bekannten Vakuumpumpe wird ein Kanal durch eine Aussparung oder Öffnung des Motorstators begrenzt. Hierdurch ist jedoch keine Aufnahmeöffnung für die Aufnahme einer Rotorwelle in einem Paket aus Stahlblechen gezeigt.

Weiterhin gehört zum Stand der Technik (DE 10 2009 026 287 A1) ein Permanentmagnetläufer, der jedoch keine rotationssymmetrische Passfederverbindung aufweist, so dass dieser zum Stand der Technik gehörende Permanentmagnetläufer den Nachteil aufweist, dass keine unwuchtfreie Drehmomentübertragung stattfindet.

Darüber hinaus gehört zum Stand der Technik (DE 20 2009 007 544 U1) ein Blechpaket für den Rotor eines Elektromotors. Dieses Blechpaket weist eine Ausnehmung auf, in der der Rotor angeordnet ist. Die Ausnehmung weist eine Vielzahl von Einschnitten auf. Diese Ausführungsform ist sehr aufwändig in der Herstellung. Hier muss auf sehr geringe Fertigungstoleranzen geachtet werden, damit ein unwuchtfreies Drehen des Rotors möglich ist.

Das der Erfindung zugrunde liegende technische Problem besteht darin, eine Vakuumpumpe anzugeben, bei der auch bei hohen Umdrehungszahlen eine große Laufruhe erzielt wird und die darüber hinaus wartungsfreundlich ist.

Dieses technische Problem wird durch eine Vakuumpumpe mit den Merkmalen gemäß Anspruch 1 oder durch eine Vakuumpumpe mit den Merkmalen gemäß Anspruch 2 gelöst.

Die erfindungsgemäße Vakuumpumpe, insbesondere Turbomolekularpumpe oder Vorvakuumpumpe für eine Turbomolekularpumpe umfassend wenigstens einen Pumpmechanismus zum Pumpen eines Gases durch die Vakuumpumpe mit einem Pump-Rotor und einer Rotorwelle und einen, insbesondere als Synchronmotor ausgebildeten Elektromotor zum Antreiben des Pumpmechanismus, wobei der Elektromotor einen Stator und einen mit dem Stator zusammenwirkenden um eine Drehachse drehbaren Elektromotor-Rotor aufweist, zeichnet sich dadurch aus, dass der Elektromotor-Rotor einen aus wenigstens einem Paket von Stahlblechen gebildeten Kern und Permanentmagnete aufweist, die um die Drehachse herum im Inneren des Kerns angeordnet sind, wobei der aus dem wenigstens einen Paket aus Stahlblechen gebildete Kern eine Aufnahmeöffnung für die formschlüssige Aufnahme des Elektromotor-Rotors aufweist, wobei die in dem wenigstens einen Paket aus Stahlblechen angeordnete Aufnahmeöffnung für die Aufnahme der Rotorwelle eine von einem Vollkreis abweichende Form aufweist, und wobei die Rotorwelle einen Abschnitt aufweist, auf der das wenigstens eine Paket aus Stahlblechen angeordnet ist, der eine der Aufnahmeöffnung angepasste Form aufweist, dass die Aufnahmeöffnung rotationssymmetrisch ausgebildet ist und dass die Aufnahmeöffnung eine vieleckförmige Form aufweist und dass das wenigstens eine Blechpaket auf der Rotorwelle mit wenigstens einer Feder und/oder wenigstens einer Federscheibe fixiert ist.

Die erfindungsgemäße Vakuumpumpe, insbesondere Turbomolekularpumpe oder Vorvakuumpumpe für eine Turbomolekularpumpe umfassend wenigstens einen Pumpmechanismus zum Pumpen eines Gases durch die Vakuumpumpe mit einem Pump-Rotor und einer Rotorwelle und einen, insbesondere als Synchronmotor ausgebildeten Elektromotor zum Antreiben des Pumpmechanismus, wobei der Elektromotor einen Stator und einen mit dem Stator zusammenwirkenden um eine Drehachse drehbaren Elektromotor-Rotor aufweist, wobei der Elektromotor-Rotor einen aus wenigstens einem Paket von Stahlblechen gebildeten Kern aufweist, wobei der aus dem wenigstens einen Paket aus Stahlblechen gebildete Kern eine Aufnahmeöffnung für die formschlüssige Aufnahme des Elektromotor-Rotors aufweist, wobei die in dem wenigstens einen Paket aus Stahlblechen angeordnete Aufnahmeöffnung für die Aufnahme der Rotorwelle eine von einem Vollkreis abweichende Form aufweist, und wobei die Rotorwelle einen Abschnitt aufweist, auf der das wenigstens eine Paket aus Stahlblechen angeordnet ist, der eine der Aufnahmeöffnung angepasste Form aufweist, zeichnet sich dadurch aus, dass der Elektromotor-Rotor Permanentmagnete aufweist, die um die Drehachse herum im Inneren des Kerns angeordnet sind, und dass die Aufnahmeöffnung rotationssymmetrisch ausgebildet ist und dass die Aufnahmeöffnung als wenigstens zweiseitig abgeflachter Kreis ausgebildet ist oder dass die Aufnahmeöffnung als Kreis mit wenigstens zwei Einschnitten ausgebildet ist und dass das wenigstens eine Blechpaket auf der Rotorwelle mit wenigstens einer Feder und/oder wenigstens einer Federscheibe fixiert ist.

Die Erfindung weist den Vorteil auf, dass auf eine Verbindung, beispielsweise mit einer Passfeder verzichtet werden kann, so dass eine vollkommen rotationssymmetrische Verbindung geschaffen wird, was wiederum bedeutet, dass eine unwuchtfreie Verbindung vorhanden ist.

Durch die vom Vollkreis abweichende Form der Aufnahmeöffnung ist eine kraftschlüssige Verbindung zwischen der Rotorwelle und dem Paket aus Stahlblechen gewährleistet, so dass auf eine Passfeder verzichtet werden kann. Darüber hinaus kann auf die Nut für die Passfeder verzichtet werden, so dass der Elektromotor-Rotor und das Paket aus Stahlblechen vollkommen rotationssymmetrisch ausgebildet werden können.

Gemäß der Erfindung ist vorgesehen, dass die Aufnahmeöffnung eine im Wesentlichen vieleckförmige Form mit wenigstens vier Ecken aufweist oder dass die Aufnahmeöffnung als wenigstens zweiseitig abgeflachter Kreis ausgebildet ist.

Der Kreis kann auch wenigstens zwei Einschnitte, beispielsweise in Form einer Passfedernut aufweisen, wobei jedoch auf die Anordnung von Passfedern verzichtet werden kann.

Gemäß einer weiteren vorteilhaften Ausführungsform der Erfindung ist vorgesehen, dass die vieleckförmige Form der Aufnahmeöffnung abgerundete Ecken aufweist. Diese Ausführungsform erleichtert die Montage.

Eine weitere vorteilhafte Ausführungsform der Erfindung sieht vor, dass die Aufnahmeöffnung wenigstens zwei rotationssymmetrisch in der Aufnahmeöffnung angeordnete Einschnitte aufweist. Durch die formschlüssige Anpassung der Rotorwelle an die Aufnahmeöffnung des Paketes von Stahlblechen wird eine kraftschlüssige Verbindung geschaffen, das heißt, dass sich bei Rotation des Paketes von Stahlblechen die Rotorwelle mitdreht. Hierbei ist zu gewährleisten, dass die Kraftübertragung in ausreichendem Maße erfolgt.

Vorteilhaft ist vorgesehen, dass die Bleche durch wenigstens eine Schweißnaht und/oder durch Lack zu einem Paket zusammengefügt ausgebildet sind und/oder dass die Bleche durch Stanzpaketieren zu einem Paket zusammengefügt ausgebildet sind.

Die Bleche können durch wenigstens eine Schweißnaht zu einem Paket zusammengefügt werden. Hierzu gibt es verschiedene Ausführungsformen, auf die noch im Einzelnen eingegangen wird.

Es besteht auch die Möglichkeit, die Pakete durch Lack zusammenzufügen. Hierzu wird vorteilhaft ein so genannter Backlack verwendet. Die Bleche werden mit dem so genannten Backlack beschichtet und anschließend zusammengepresst und gleichzeitig erhitzt, so dass der Lack bei der entsprechenden Temperatur schmilzt und die Bleche miteinander verbunden werden.

Dadurch können die Stahlbleche besonders gut zusammengehalten werden. Bei der Ausgestaltung ohne Schweißnähte entfallen außerdem störende Einflüsse der Schweißnähte auf den Magnetfluss der Rotor-Permanentmagnete. Bevorzugt werden die Stahlbleche vor dem Bilden des Pakets mit Backlack versehen und nach dem Zusammensetzen der Stahlbleche zu dem Paket durch Erhitzen des Backlacks miteinander verbacken.

Es besteht auch die Möglichkeit, die Bleche durch ein so genanntes Stanzpaketieren zu einem Paket zusammenfügen. Das Stanzpaketieren hat den Vorteil, dass sehr kleine Toleranzwerte eingehalten werden können, so dass meist auf eine Nachbearbeitung verzichtet werden kann. Beim Stanzpaketieren werden im Werkzeug von beispielsweise Schnellstanzautomaten kompakte Pakete aus geschichteten Blechlamellen produziert. Die einzelnen Lamellen werden dabei in einer sehr schnellen Folge durch herausgepresste Noppen verschiedener Ausführung miteinander verbunden.

Gemäß der Erfindung ist vorgesehen, dass das wenigstens eine Blechpaket auf der Rotorwelle mit wenigstens einer Feder und/oder wenigstens einer Federscheibe fixiert ist. Die Feder und/oder Federscheibe liegt an dem Blechpaket an und übt eine Kraft in axialer Richtung, das heißt parallel zu einer Drehachse des Elektromotor-Rotors wirkend, auf das Blechpaket aus. Die Feder und/oder Federscheibe kann vorteilhaft durch eine oder mehrere rotationssymmetrisch angeordnete Schrauben in und/oder an der Rotorwelle fixiert sein.

Das bedeutet, dass vorteilhaft die wenigstens eine Feder und/oder wenigstens eine Federscheibe durch wenigstens eine rotationssymmetrisch in der Rotorwelle angeordnete Schraube fixiert ist.

Eine weitere bevorzugte Ausführungsform der Erfindung sieht vor, dass das wenigstens eine Blechpaket demontierbar auf der Rotorwelle angeordnet ist. Diese Ausführungsform weist den Vorteil auf, dass die Vakuumpumpe beispielsweise zu Wartungszwecken demontiert werden kann, ohne dass im Bereich des Elektromotor-Rotors und des Paketes aus Stahlblechen Teile ausgetauscht werden müssen.

Vorteilhaft ist vorgesehen, dass die Vakuumpumpe als Scroll-, Schraubenvakuum-, Membran-, Drehschieber-, Hubkolben- oder Wälzkolbenpumpe ausgebildet ist. Die Erfindung kann jedoch auch bei anderen Pumpenarten und bei Kombinationen der verschiedenen Pumptypen eingesetzt werden.

Wie schon ausgeführt, können die Bleche des Blechpaketes durch eine Schweißnaht zusammengefügt werden. Vorteilhaft liegt die Schweißnaht nicht in radialer Richtung gesehen vor der Mitte einer Magnetpolstirnfläche eines im Kern angeordneten Permanentmagneten, sondern an der Außenseite eines Kernabschnitts, der zwischen zwei benachbarten Permanentmagneten liegt. Durch die Anordnung der Schweißnaht an der Außenseite des zwischen den Permanentmagneten liegenden Kernabschnittes können von der Schweißnaht auf den Magnetfluss der Rotor-Permanentmagnete bewirkte Störungen verringert und im optimalen Fall vermieden werden, wodurch die Betriebseigenschaften des Elektromotors der erfindungsgemäßen Vakuumpumpe verbessert werden.

Vorzugsweise erstreckt sich die Schweißnaht parallel zur Drehachse. Bevorzugt ist die Schweißnaht dabei in einer in dem Paket von Stahlblechen vorgesehenen, parallel zur Drehachse verlaufenden Nut angeordnet. Der den Kern bildende Stapel aus Stahlblechen wird normalerweise dadurch gebildet, dass die Stahlbleche längs der Drehachse gesehen aneinandergereiht oder gestapelt sind. Indem die Schweißnaht an der Außenseite des Kerns oder des Blechstapels parallel zur Drehachse gezogen wird, können die Bleche somit in optimaler Weise von der Schweißnaht zusammengehalten werden.

Bei dem Stahlblech handelt es sich insbesondere um Elektroblech.

Vorzugsweise ist die Schweißnaht in Drehrichtung des Elektromotor-Rotors gesehen in der Mitte des Kernabschnitts auf der Außenseite des Kernabschnitts angeordnet. Die Schweißnaht verläuft somit gewissermaßen mittig zwischen den beiden benachbarten Permanentmagneten. Die Schweißnaht wirkt sich daher kaum oder im optimalen Fall überhaupt nicht störend auf den Magnetfluss der Rotor-Permanentmagnete aus.

Nach einer Weiterbildung der Erfindung ist an der Außenseite jedes Abschnitts des Kerns, der zwischen jeweils zwei in Drehrichtung des Elektromotor-Rotors gesehen benachbarten Permanentmagneten liegt, jeweils wenigstens eine Schweißnaht vorgesehen. Dadurch kann das den Kern bildende Blechpaket in optimaler Weise von den Schweißnähten zusammengehalten werden, ohne dass sich diese störend auf den Magnetfluss der Rotor-Permanentmagnete auswirken.

Vorzugsweise ist jeder Permanentmagnet im Inneren des Kerns in einer Aufnahme angeordnet, die gasdicht verschlossen ist. Die Permanentmagnete können somit in der jeweiligen Aufnahme gasdicht eingekapselt sein und somit vor Versprödung, zum Beispiel durch Wasserstoff, oder vor Korrosion, zum Beispiel durch ein von der Pumpe gefördertes korrosiv wirkendes Gas, geschützt werden.

Der Elektromotor-Rotor kann in Umfangsrichtung des Elektromotor-Rotors gesehen eine vorgegebene Anzahl an Rotorpolen aufweisen, wobei jeder Rotorpol wenigstens eine der Aufnahmen für den oder die Permanentmagnete umfasst.

Durch die Anordnung der Permanentmagnete in den Aufnahmen sind die Permanentmagnete eingebettet beziehungsweise vergraben. Dadurch werden die Permanentmagnete auch bei hohen Drehzahlen des Rotors des Elektromotors in den Aufnahmen sicher gehalten. Bandagen zum Halten der Permanentmagnete können daher eingespart werden. Unter anderem weil kein Platz für Bandagen vorgesehen werden muss, kann der effektive Luftspalt zwischen dem Rotor und dem Stator des Elektromotors klein gehalten werden. Dies wirkt sich vorteilhaft auf den Betrieb und die Leistungsfähigkeit des Elektromotors und somit der Vakuumpumpe aus. Insbesondere hat ein kleiner effektiver Luftspalt einen niedrigen Kurzschlussstrom zur Folge.

Nach einer Weiterbildung der Erfindung weist jeder Rotorpol eine Aufnahme auf, in der alle Permanentmagnete des Rotorpols eingebettet sind. Eine einzige Aufnahme kann im Vergleich zu mehreren separaten Aufnahmen pro Rotorpol herstellungstechnisch einfacher realisiert werden. Allerdings kann jeder Rotorpol auch für jeden seiner Permanentmagnete eine separate Aufnahme aufweisen.

Die Aufnahme kann derart dimensioniert sein, dass in Umfangsrichtung des Elektromotor-Rotors gesehen, in radialer Richtung und/oder in axialer Richtung wenigstens zwei Permanentmagnete nebeneinander in der Aufnahme angeordnet werden können.

Dabei beziehen sich die Begriffe "radiale Richtung" und "axiale Richtung" auf die Drehachse des Rotors des Elektromotors, das heißt, radiale Richtungen verlaufen radial von der Drehachse weg und eine axiale Richtung verläuft längs der Drehachse.

Die in einer Aufnahme angeordneten Permanentmagnete können im Verbund höhere Magnetfelder erzeugen, so dass die Leistungsfähigkeit des Elektromotors verbessert werden kann. Die Anzahl der Permanentmagnete in radialer und/oder axialer Richtung ist dabei insbesondere auch von der Motorgröße und/oder einem zu erreichenden maximalen Motor-Drehmoment abhängig.

Die Stahlbleche können in axialer Richtung beziehungsweise in Längsrichtung der Drehachse gesehen zwischen zwei Stirnblechen, insbesondere aus Elektroblech, angeordnet sein. Von der Geometrie her können die Stirnbleche gleich ausgestaltet sein wie die Stahl- beziehungsweise Rotorbleche des Kerns, allerdings ohne dass in den Stirnflächen durchgehende Aussparungen vorgesehen sind, die die Aufnahmen für die Permanentmagnete ergeben, wenn die Stahlbleche zum Rotorkern zusammengesetzt sind.

Die Stirnbleche können die Aufnahmen an ihren außen liegenden Enden verdecken und/oder abdichten. Die in den Aufnahmen angeordneten Permanentmagnete können somit unter Verwendung der Stirnbleche eingekapselt und vor Versprödung und Korrosion geschützt werden.

Vorteilhaft weist der Elektromotor-Rotor in Umfangsrichtung des Rotors gesehen eine vorgegebene Anzahl an Rotorpolen auf, wobei jeder Rotorpol wenigstens einen der Permanentmagnete umfasst und wobei jeder Rotorpol eine einer Richter-Kontur entsprechende Außenkontur aufweist. Dabei verläuft die Außenkontur entsprechend einer inversen Cosinus-Funktion, so dass sich zwischen dem Rotorpol und dem Stator des Elektromotors eine zumindest näherungsweise sinusförmige Luftspaltflussdichteverteilung ergibt. Diese bewirkt bei laufendem Elektromotor eine zumindest näherungsweise sinusförmige induzierte Spannung in den statorseitigen Leitersträngen, was sich wiederum positiv auf den Betrieb des Elektromotors auswirkt.

Der Elektromotor-Rotor kann aber auch eine Außenkontur aufweisen, die einer Kreisform entspricht. Dabei entspricht die Außenkontur jedes Rotorpols einem Teilkreis.

Der Elektromotor-Rotor kann in Umfangsrichtung des Rotors gesehen eine vorgegebene Anzahl an Rotorpolen umfassen, wobei jeder Rotorpol wenigstens zwei Permanentmagnete umfasst, wobei die Permanentmagnete eines jeweiligen Rotorpols, insbesondere in einer, zwei, drei oder noch mehr Schichten, V-förmig angeordnet sind. Dadurch kann der Magnetfluss für jeden Pol konzentriert werden, wodurch die Betriebseigenschaften des Elektromotors verbessert werden.

Am Stator kann jeder statorseitige elektrische Wicklungsstrang nach Art einer verteilten Einschichtwicklung oder nach Art einer verteilten Zweischichtwicklung oder nach Art einer Zahnspulenwicklung angeordnet sein.

Vorteilhaft ist wenigstens einer der Permanentmagnete und bevorzugt jeder der Permanentmagnete ein Ferritmagnet und besonders bevorzugt ein hartmagnetischer Ferritmagnet, insbesondere ein Barium- Ferritmagnet, oder ein Seltenerdmagnet.

Wenigstens einer der Permanentmagnete und bevorzugt jeder der Permanentmagnete kann an magnetischem Material NdFeB oder SmCo, insbesondere SmCo5 oder Sm2Co17, aufweisen oder aus NdFeB oder SmCo, insbesondere SmCo5 oder Sm2Co17, bestehen.

Wenigstens einer der Permanentmagnete und bevorzugt jeder der Permanentmagnete kann eine vor Versprödung, insbesondere durch Wasserstoff, und/oder vor Korrosion schützende Beschichtung aufweisen. Die Beschichtung kann eine Metallschicht und/oder eine Kunststoffschicht aufweisen. Vorzugsweise befindet sich die Kunststoffschicht über der Metallschicht. Bei der Kunststoffschicht kann es sich bevorzugt um eine Schicht aus Epoxy-Sprühlack handeln. Die Metallschicht kann Zinn, Wolfram, Gold, Silber und/oder Aluminium umfassen oder aus einem der genannten Metalle bestehen.

Im Inneren des Rotorkerns können um die Rotordrehachse herum angeordnete Ausnehmungen vorgesehen sein, durch die das Gewicht des Elektromotor-Rotors reduziert wird. Vorzugsweise befinden sich die Ausnehmungen in radialer Richtung gesehen weiter innen als die Aufnahmen für die Permanentmagnete. Vorzugsweise weist jede Ausnehmung in radialer Richtung gesehen einen im Wesentlichen dreieckigen Querschnitt auf.

Nach einer weiteren Ausgestaltung der Erfindung, weist jeder Permanentmagnet eine Magnetisierungsrichtung auf, wobei die Magnetisierungsrichtung wenigstens eines Permanentmagneten nicht parallel verläuft zu der in Bezug auf die Drehachse gesehen radialen Richtung, die zumindest näherungsweise die Mitte des Permanentmagneten schneidet.

Bevorzugt sind alle Permanentmagnete derart angeordnet, dass ihre jeweilige Magnetisierungsrichtung nicht parallel ausgerichtet ist zu der jeweiligen radialen Richtung, die zumindest näherungsweise die Mitte des jeweiligen Permanentmagneten schneidet.

Die Permanentmagnete sind somit im Rotorkern, insbesondere in den jeweiligen Aufnahmen für die Permanentmagnete, derart angeordnet, dass deren Magnetisierungsrichtung nicht parallel zu einer radialen Richtung, bezogen auf die Drehachse des Elektromotor-Rotors, verläuft. Bevorzugt verläuft aber die Magnetisierungsrichtung in einer Ebene, die senkrecht zur Drehachse des Elektromotor-Rotors verläuft. Dabei wird als Magnetisierungsrichtung die Richtung angesehen, die vom Südpol zum Nordpol des Permanentmagneten verläuft.

Nach einer bevorzugten Weiterbildung ist die Magnetisierungsrichtung des wenigstens einen Permanentmagneten und bevorzugt jedes Permanentmagneten in einem Winkel zwischen 10 Grad und 170 Grad, bevorzugt zwischen 25 Grad und 155 Grad, zu der jeweiligen radialen Richtung angeordnet.

Die Magnetisierungsrichtung des wenigstens einen Permanentmagneten und bevorzugt jedes Permanentmagneten kann auch in einem Winkel von zumindest annähernd 90 Grad zur jeweiligen radialen Richtung ausgerichtet sein.

Bei dem Elektromotor der erfindungsgemäßen Vakuumpumpe ist, insbesondere wenn der Elektromotor als Synchronmaschine ausgestaltet ist, außerdem aufgrund des kleinen effektiven Luftspalts und der im Innern des Rotorkerns angeordneten Permanentmagnete ein Feldschwächbetrieb mit einem gegenüber oberflächenmontierten Permanentmagneten geringeren Strom möglich. Bei dem an sich bekannten Feldschwächbetrieb wird das durch die Permanentmagnete erzeugte Magnetfeld durch ein elektrisch erregtes Gegenfeld des Stators geschwächt. Ein Vorteil des Feldschwächbetriebs ist, dass ein verhältnismäßig großer Drehzahlbereich mit einer konstanten mechanischen Ausgangsleistung realisiert werden kann.

Weiterhin ist an dem Elektromotor der erfindungsgemäßen Vakuumpumpe vorteilhaft, dass dieser insbesondere wegen der vergrabenen Permanentmagnete ein sogenanntes Reluktanzmoment nutzen kann.

Der Rotor des Elektromotors kann über eine Welle mit einem beweglichen Teil des Pumpmechanismus, wie etwa einem Pump-Rotor einer Turbomolekularpumpe oder einer WälzkolbenPumpe oder einer Schrauben-Vakuumpumpe oder einer Drehschieber-Pumpe, einem Pump-Kolben einer Hubkolbenpumpe, einer beweglichen Spirale einer Scroll-Pumpe oder einer Pump-Membran einer Membranpumpe gekoppelt sein, um eine Rotationsbewegung des Rotors auf den beweglichen Teil des Pumpmechanismus zu übertragen.

Der Stator kann eine Innenausnehmung zur drehbeweglichen Aufnahme des Elektromotor-Rotors aufweisen, in der der Elektromotor-Rotor drehbeweglich aufgenommen ist.

Weitere Merkmale und Vorteile der Erfindung ergeben sich anhand der zugehörigen Zeichnung, in der mehrere Ausführungsbeispiele einer erfindungsgemäßen Turbomolekularpumpe nur beispielhaft dargestellt sind. In der Zeichnung zeigen:
- Fig. 1: eine Vakuumpumpe im Querschnitt;
- Fig. 2: einen radialen Querschnitt durch einen Stator und einen Rotor eines Elektromotors einer erfindungsgemäßen Vakuumpumpe (nicht vom Schutzbereich des Anspruches 1 oder Anspruches 2 umfasst);
- Fig. 3: ein geändertes Ausführungsbeispiel eines radialen Querschnittes;
- Fig. 4: ein geändertes Ausführungsbeispiel eines radialen Querschnittes;
- Fig. 5: einen Längsschnitt durch eine Rotorwelle;
- Fig. 6: einen radialen Querschnitt durch eine andere Variante eines Rotors eines Elektromotors einer erfindungsgemäßen Vakuumpumpe;
- Fig. 7: einen radialen Querschnitt durch noch eine andere Variante eines Rotors eines Elektromotors einer erfindungsgemäßen Vakuumpumpe;
- Fig. 8: einen radialen Querschnitt durch noch eine andere Variante eines Rotors eines Elektromotors einer erfindungsgemäßen Vakuumpumpe.

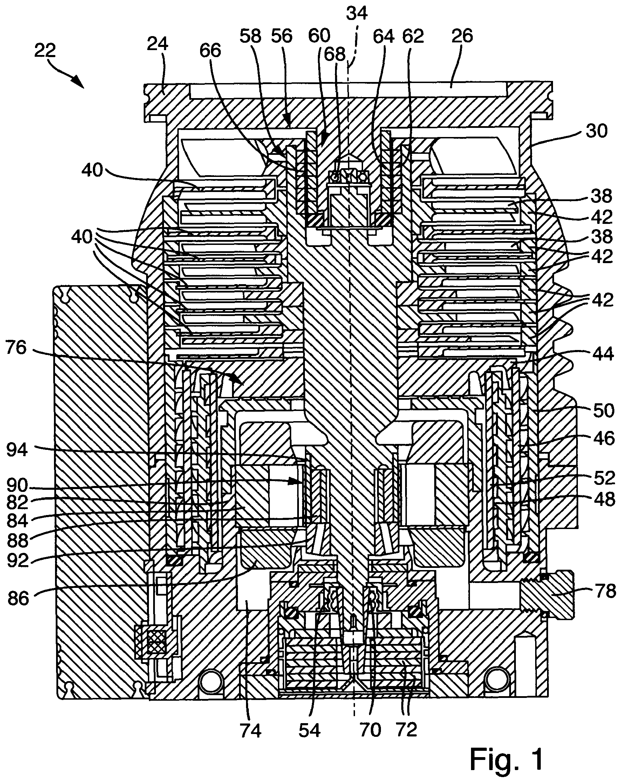

Die in Fig. 1 gezeigte Vakuumpumpe 22 umfasst einen von einem Einlassflansch 24 umgebenen Pumpeneinlass 26 sowie mehrere Pumpstufen zur Förderung des an dem Pumpeneinlass 26 anstehenden Gases zu einem in Fig. 1 nicht dargestellten Pumpenauslass eines Rezipienten. Die Vakuumpumpe 22 umfasst ein Gehäuse 30 und einen in dem Gehäuse 30 angeordneten Pump-Rotor 32 mit einer um eine Rotationsachse 34 drehbar gelagerten Rotorwelle 36.

Die Pumpe 22 ist als Turbomolekularpumpe ausgebildet und umfasst mehrere pumpwirksam miteinander in Serie geschaltete turbomolekulare Pumpstufen mit mehreren an der Rotorwelle 36 befestigten turbomolekularen Rotorscheiben 38 und in axialer Richtung zwischen den Rotorscheiben 38 angeordneten und in dem Gehäuse 30 festgelegten Statorscheiben 40. Die Statorscheiben 40 sind durch Abstandsringe 42 in einem gewünschten axialen Abstand zueinander gehalten.

Die Vakuumpumpe 22 umfasst außerdem drei in radialer Richtung ineinander angeordnete und pumpwirksam miteinander in Serie geschaltete Holweckpumpstufen. Der rotorseitige Teil der Holweckpumpstufen umfasst eine mit der Rotorwelle 36 verbundene Rotornabe 44 und zwei an der Rotornabe 44 befestigte und von dieser getragene zylindermantelförmige Holweckrotorhülsen 46, 48, die koaxial zu der Rotationsachse 34 orientiert und in radialer Richtung ineinander geschachtelt sind. Ferner sind zwei zylindermantelförmige Holweckstatorhülsen 50, 52 vorgesehen, die ebenfalls koaxial zu der Rotationsachse 34 orientiert und in radialer Richtung ineinander geschachtelt sind. Die pumpaktiven Oberflächen der Holweckpumpstufen sind jeweils durch die einander unter Ausbildung eines engen radialen Holweckspalts gegenüberliegenden radialen Mantelflächen jeweils einer Holweckrotorhülse 46, 48 und einer Holweckstatorhülse 50, 52 gebildet. Dabei ist jeweils eine der pumpaktiven Oberflächen glatt ausgebildet - vorliegend diejenige der Holweckrotorhülse 46 beziehungsweise 48 - und die gegenüberliegende pumpaktive Oberfläche der Holweckstatorhülse 50, 52 weist eine Strukturierung mit schraubenlinienförmig um die Rotationsachse 34 herum in axialer Richtung verlaufende Nuten auf, in denen bei der Rotation des Pump-Rotors 32 das Gas vorangetrieben und dadurch gepumpt wird.

Die drehbare Lagerung der Rotorwelle 36 wird durch ein Wälzlager 54 im Bereich des Pumpenauslasses und ein Permanentmagnetlager 56 im Bereich des Pumpeneinlasses 26 bewirkt.

Das Permanentmagnetlager 56 umfasst eine rotorseitige Lagerhälfte 58 und eine statorseitige Lagerhälfte 60, welche jeweils einen Ringstapel aus mehreren in axialer Richtung aufeinander gestapelten permanentmagnetischen Ringen 62, 64 umfassen, wobei sich die Magnetringe 62, 64 unter Ausbildung eines radialen Lagerspalts 66 gegenüberliegen.

Innerhalb des Magnetlagers 56 ist ein Not- beziehungsweise Fanglager 68 vorgesehen, welches als ungeschmiertes Wälzlager ausgebildet ist und im normalen Betrieb der Vakuumpumpe ohne Berührung leer läuft und erst bei einer übermäßigen radialen Auslenkung des Pump-Rotors 32 gegenüber dem Stator in Eingriff gelangt, um einen radialen Anschlag für den Pump-Rotor 32 zu bilden, der eine Kollision der rotorseitigen Strukturen mit den statorseitigen Strukturen verhindert.

Im Bereich des Wälzlagers 54 ist an der Rotorwelle 36 eine konische Spritzmutter 70 mit einem zu dem Wälzlager 54 hin zunehmenden Außendurchmesser vorgesehen. Die Spritzmutter 70 steht mit zumindest einem Abstreifer eines mehrere aufeinander gestapelte saugfähige Scheiben 72 umfassenden Betriebsmittelspeichers in gleitendem Kontakt, welche mit einem Betriebsmittel wie zum Beispiel einem Schmiermittel für das Wälzlager 54 getränkt sind. Im Betrieb der Vakuumpumpe wird das Betriebsmittel durch kapillare Wirkung von dem Betriebsmittelspeicher über den Abstreifer auf die rotierende Spritzmutter 70 übertragen und infolge der Zentrifugalkraft entlang der Spritzmutter 70 in Richtung des größer werdenden Außendurchmessers der Spritzmutter 70 zu dem Wälzlager 54 hin gefördert, wo es zum Beispiel eine schmierende Funktion erfüllt.

Die Vakuumpumpe 22 umfasst einen Motorraum 74, in den sich die Rotorwelle 36 hinein erstreckt. Der Motorraum 74 ist im Bereich des Eintritts der Rotorwelle 36 durch eine Labyrinthdichtung 76 gegenüber dem Arbeits- beziehungsweise Schöpfraum der Vakuumpumpe abgedichtet. Ein Sperrgaseinlass 78 ermöglicht den Einlass eines Sperrgases in den Motorraum 74.

In dem Motorraum 74 ist der als Elektromotor, insbesondere als Synchronmotor ausgebildete, Antriebsmotor der Vakuumpumpe 22 angeordnet. Der Antriebsmotor dient zum drehenden Antreiben des Pump-Rotors 32 und umfasst einen Motorstator 82 mit einem Kern 84 und mit mehreren in Fig. 1 nur schematisch dargestellten Spulen 86, die in an der radialen Innenseite des Kerns 84 vorgesehenen Nuten des Kerns 84 festgelegt sind. Der Kern 84 besteht aus einem Blechpaket mit mehreren in axialer Richtung aufeinander gestapelten Blechscheiben aus einem weichmagnetischen Material.

Der Rotor des Antriebsmotors, welcher auch als Läufer oder Anker bezeichnet wird, ist durch die Rotorwelle 36 gebildet, die sich durch den Motorstator 82 hindurch erstreckt. Auf dem sich durch den Motorstator 82 hindurch erstreckenden Abschnitt der Rotorwelle 36 ist radial außenseitig eine Permanentmagnetanordnung 88 festgelegt. Zwischen dem Motorstator 82 und dem sich durch den Motorstator 82 hindurch erstreckenden Abschnitt der Rotorwelle 36 ist ein radialer Motorspalt 90 ausgebildet, über den sich der Motorstator 82 und die Permanentmagnetanordnung 88 zur Übertragung des Antriebsmoments magnetisch beeinflussen.

Die Permanentmagnetanordnung 88 ist in axialer Richtung durch eine auf die Rotorwelle 36 aufgesteckte Befestigungshülse 92 an der Rotorwelle 36 fixiert.

Eine Kapselung 94 umgibt die Permanentmagnetanordnung 88 an deren radialer Außenseite und dichtet diese gegenüber dem Motorspalt 90 ab.

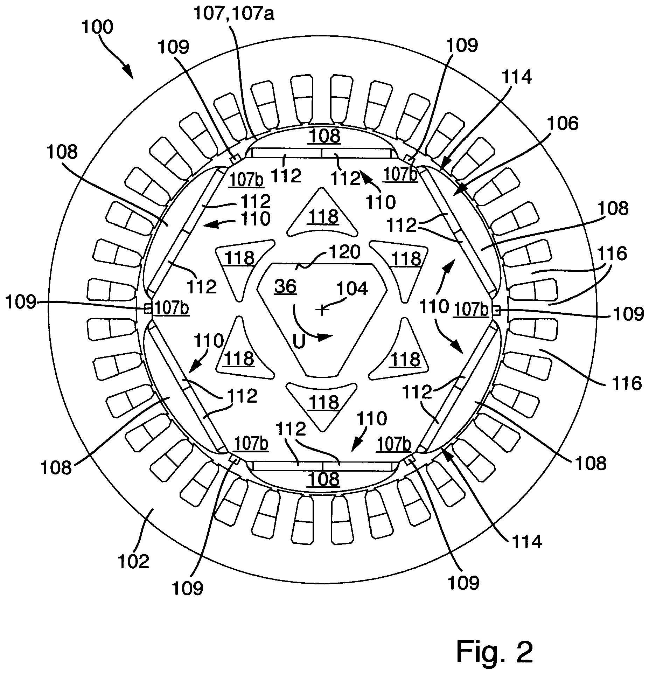

Der in einem radialen Querschnitt in Fig. 2 dargestellte Elektromotor 100 einer erfindungsgemäßen Vakuumpumpe weist einen außenliegenden Stator 102 und einen mit dem Stator 102 zusammenwirkenden, um eine Drehachse 104 drehbaren Elektromotor-Rotor 106 auf. Der Elektromotor-Rotor 106 weist einen Kern 107 auf, der von einem Paket aus Stahlblechen 107a gebildet ist, wobei ein Stahlblech 107a im Querschnitt in Fig. 2 gezeigt ist. Die Stahlbleche 107a sind in axialer Richtung, also in Längsrichtung der Drehachse 104, aneinandergereiht, so dass sie das Paket beziehungsweise den Kern 107 bilden. Bei dem Stahlblech 107a handelt es sich insbesondere um ein Elektroblech. Der Elektromotor-Rotor 106 weist in Umfangsrichtung U des Elektromotor-Rotors 106 gesehen eine vorgegebene Anzahl an Rotorpolen 108 auf, wobei für jeden Rotorpol 108 im Inneren des Kerns 107 eine Aufnahme 110 vorgesehen ist, in der wenigstens ein Permanentmagnet 112 angeordnet ist.

Die Permanentmagnete 112 sind somit im Inneren des Kerns 107 um die Drehachse 104 herum angeordnet. Im Unterschied zu dem Antriebsmotor der Vakuumpumpe 22 der Fig. 1, bei dem die Permanentmagnetanordnung 88 radial außenseitig an der Rotorwelle 36 angebracht und von der Kapselung 94 eingekapselt ist, sind bei dem Elektromotor 100 die Permanentmagnete 112 somit im Kern 107 vergraben beziehungsweise darin eingebettet.

Im in Fig. 2 dargestellten Beispiel beträgt die vorgegebene Anzahl an Rotorpolen 108 sechs Rotorpole. In jeder Aufnahme 110 sind in Umfangsrichtung U des Elektromotor-Rotors 106 gesehen zwei Permanentmagnete 112 hintereinander angeordnet. Nicht gezeigt ist, dass auch in axialer Richtung, also in Längsrichtung der Drehachse 104 gesehen, jeweils zwei oder mehr Permanentmagnete 112 nebeneinander in der jeweiligen Aufnahme 110 angeordnet sein können. Außerdem können, wiederum bezogen auf die Drehachse 104, in radialer Richtung gesehen zwei oder mehr Permanentmagnete 112 in der jeweiligen Aufnahme 110 vorgesehen sein, was ebenfalls nicht gezeigt ist.

Jeder Rotorpol 108 weist eine Außenkontur 114 auf, die einer sogenannten Richter-Kontur entspricht. Die Außenkontur 114 verläuft dabei wenigstens näherungsweise in Form einer inversen Cosinus-Funktion und bildet mit der Innenkontur des Stators 102 einen effektiven Luftspalt, der eine möglichst sinusförmige Luftspaltflussdichteverteilung ermöglicht.

Zur Gewichtsreduktion ist in jedem Pol 108 eine Ausnehmung 118 vorgesehen. Die Ausnehmung 118 weist, wie Fig. 2 zeigt, einen im Wesentlichen dreieckigen Querschnitt auf.

Bei den Permanentmagneten 112 handelt es sich bevorzugt um Ferritmagnete, insbesondere um Barium-Ferritmagnete, oder um Seltenerdmagnete. Jeder Permanentmagnet 112 kann ferner eine Beschichtung aufweisen, die ihn vor Versprödung, insbesondere durch Wasserstoff, und/oder Korrosion schützt.

Ferner können die Stahl- beziehungsweise Rotorbleche 107a in axialer Richtung gesehen zwischen zwei Stirnblechen, die ebenfalls zum Beispiel aus Elektroblech ausgebildet sein können, angeordnet sein (nicht gezeigt). Durch die beiden Stirnbleche können die Aufnahmen 110 für die Permanentmagnete 112 an ihren axialen Enden gasdicht verschlossen werden. Die Permanentmagnete 112 können somit in den Aufnahmen 110 gasdicht eingekapselt werden, um diese vor Korrosion und/oder Versprödung zu schützen. Eine zusätzliche Beschichtung der einzelnen Permanentmagnete kann daher entfallen.

Auf Seiten des Stators 102 sind Statorzähne 116 vorgesehen, die radial nach innen ragen. Statorseitig sind in an sich bekannter Weise elektrische Wicklungsstränge vorgesehen, die von den Statorzähnen nach Art einer Zahnspulenwicklung getragen werden (nicht gezeigt).

Der Elektromotor 100 der Fig. 2 kann in den Motorraum 74 der Vakuumpumpe 22 der Fig. 1 anstelle des mit Bezug auf die Fig. 1 beschriebenen Antriebsmotors eingebaut werden. Dabei wird der Elektromotor-Rotor 106 mit der Rotorwelle 36 gekoppelt, so dass die Rotorwelle 36 mittels des Elektromotor-Rotors 106 angetrieben werden kann. Dadurch wird eine Vakuumpumpe gebildet, deren Elektromotor 100 rotorseitige Permanentmagnete 112 aufweist, die innerhalb des Elektromotor-Rotors 106 angeordnet und somit im Elektromotor-Rotor 106 vergraben beziehungsweise eingebettet sind.

Die Kopplung des Elektromotor-Rotors 106 mit der Rotorwelle 36 erfolgt über eine Aufnahmeöffnung 120. Die Aufnahmeöffnung 120 weist eine im wesentlichen dreieckförmige Form auf, so dass die Rotorwelle 36, der im Bereich der Aufnahmeöffnung 120 eine der Aufnahmeöffnung 120 angepasste Außenkontur aufweist, formschlüssig in der Aufnahmeöffnung 120 angeordnet ist. Hierdurch wird eine Rotationsbewegung des Elektromotor-Rotors 106 auf die Rotorwelle 36 der Vakuumpumpe 22 übertragen.

Durch die Ausgestaltung der Aufnahmeöffnung 120 in einer von einem Vollkreis abweichenden Form ist eine unmittelbare Kraftübertragung von dem Elektromotor-Rotor 106 mit der Aufnahmeöffnung 120 auf die Rotorwelle 36 möglich. Es kann auf die zum Stand der Technik gehörende Passfederverbindung verzichtet werden. Die Aufnahmeöffnung 120 ist rotationssymmetrisch ausgebildet, so dass die Verbindung zwischen dem Elektromotor-Rotor 106 und der Rotorwelle 36 eine unwuchtfreie Verbindung darstellt.

Bei dem Elektromotor 100 der Fig. 2 weist der Kern 107 Abschnitte 107b auf, die zwischen zwei in Drehrichtung beziehungsweise Umfangsrichtung U des Elektromotor-Rotors 106 gesehen benachbarten Permanentmagneten 112 liegen. An der Außenseite dieser Abschnitte 107b verläuft jeweils eine Schweißnaht 109 in paralleler Richtung zur Drehachse 104. Die Schweißnähte 109 sind dabei mittig zentriert auf dem jeweiligen Abschnitt 107b aufgebracht. Sie können jedoch auch außermittig angeordnet sein. Durch die Schweißnähte 109 werden die aneinandergereihten Stahlbleche 107a zusammengehalten, so dass der Kern 107 eine feste Anordnung aus den Stahlblechen 107a bildet. Zusätzlich oder alternativ zu den Schweißnähten 109 können die Stahlbleche 107a mittels eines Backlacks miteinander verbackt sein.

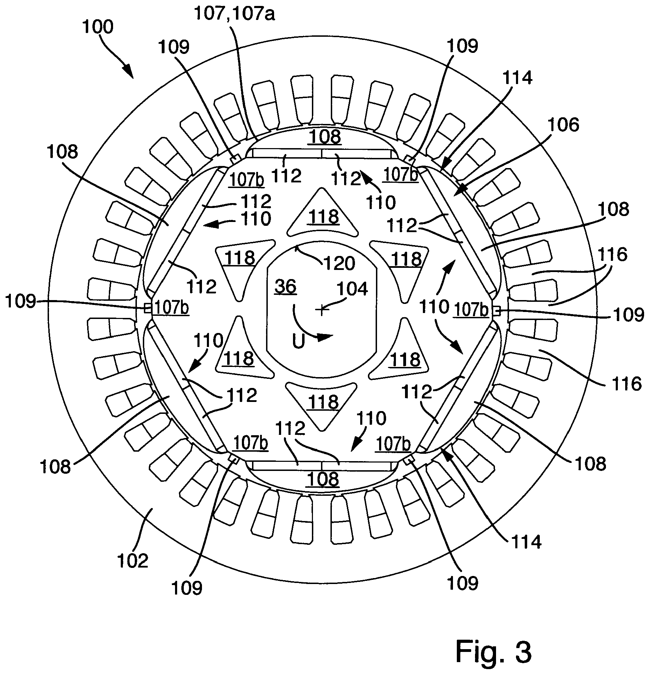

Fig. 3 zeigt ein geändertes Ausführungsbeispiel in Bezug auf die Ausnehmung 120.

Gleiche Teile sind mit gleichen Bezugszahlen versehen wie bei den vorhergehenden Figuren.

In Fig. 3 weist die Aufnahmeöffnung 120 eine Form eines zweiseitig abgeflachten Kreises auf.

Durch diese Ausgestaltung ist es wiederum möglich, die Rotationsbewegung des Motorrotors 106 unmittelbar auf die Rotorwelle 36, die im Bereich der Aufnahmeöffnung 120 eine der Aufnahmeöffnung 120 angepasste Außenkontur aufweist, zu übertragen.

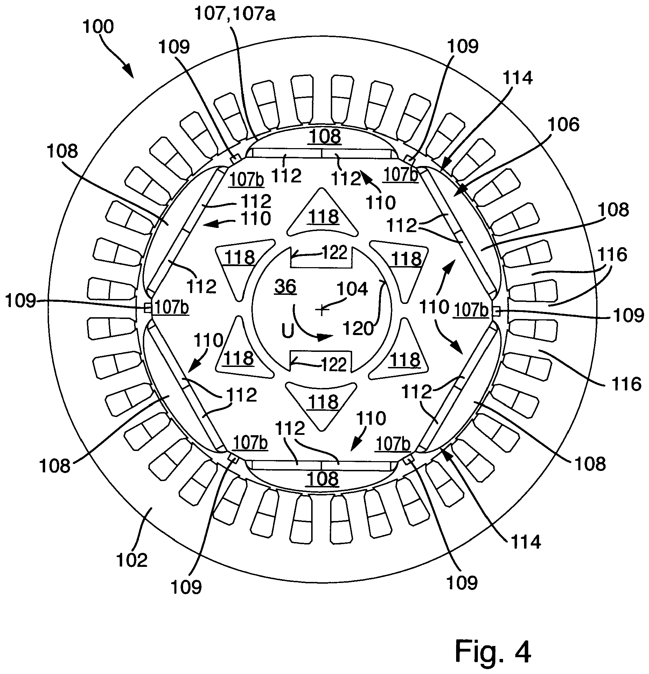

Fig. 4 zeigt ein weiteres Ausführungsbeispiel. Gleiche Teile sind wiederum mit gleichen Bezugszahlen versehen.

Die Aufnahmeöffnung 120 weist zwei rotationssymmetrisch in der Ausnehmung angeordnete Einschnitte 122 auf. Auch diese Ausgestaltung der Aufnahmeöffnung 120 erlaubt eine kraft- und formschlüssige Verbindung zwischen der Aufnahmeöffnung 120 und der Rotorwelle 36, so dass eine Drehbewegung des Elektromotor-Rotors 106 auf die Rotorwelle 36 übertragen wird. Die Übertragung der Drehbewegung erfolgt alleine aufgrund der form- und kraftschlüssigen Verbindung zwischen der Aufnahmeöffnung 120 und der Rotorwelle 36. Zusätzliche Federn wie bei Passfedernutverbindung sind nicht erforderlich.

Es ist möglich, auch andere Ausgestaltungen der Aufnahmeöffnung 120 vorzunehmen. Vorteilhaft ist die Aufnahmeöffnung 120 rotationssymmetrisch ausgebildet, um eine unwuchtfreie Verbindung zwischen der Aufnahmeöffnung 120 und der Rotorwelle 36 zu gewährleisten.

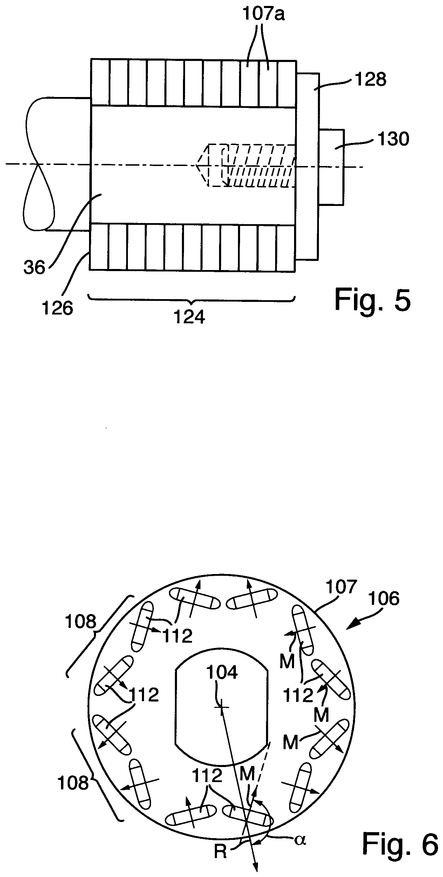

Fig. 5 zeigt die Rotorwelle 36, auf der in einem Abschnitt 124 Stahlbleche 107a angeordnet sind. Die Stahlbleche 107a sind auf einer Seite gegen einen Anschlag 126 der Rotorwelle 36 montiert. Auf der anderen Seite werden die Stahlbleche durch eine Federscheibe 128, die durch eine Schraube 130 in der Rotorwelle 36 fixiert wird. Die Anordnung der Stahlbleche 107a auf der Rotorwelle 36 ist als rotationssymmetrische Verbindung ausgestaltet. Auch die Fixierung durch die Federscheibe 128 und der axialmittig in der Rotorwelle 36 angeordneten Schraube 133 ist rotationssymmetrisch, so dass eine unwuchtfreie Verbindung ausgebildet wird.

In den Fig. 6 bis 8 sind andere Varianten des Elektromotor-Rotors 106 dargestellt. Dabei ist jeder Permanentmagnet 112 mit seiner Magnetisierungsrichtung M eingezeichnet, wobei die Magnetisierungsrichtung M diejenige Richtung ist, die vom Südpol zum Nordpol des jeweiligen Permanentmagneten 112 gerichtet ist. Bei den in den Fig. 6 bis 8 gezeigten Varianten sind die Permanentmagnete 112 derart im Kern 107 eingebettet, dass die Magnetisierungsrichtung M jedes Permanentmagneten 112 nicht parallel verläuft zu der jeweiligen in Bezug auf die Drehachse 104 gesehen radialen Richtung R, die zumindest näherungsweise die Mitte des jeweiligen Permanentmagneten 112 schneidet. Dies ist in den Fig. 6 bis 8 exemplarisch für einen Permanentmagneten 112 verdeutlicht.

Insbesondere ist die Magnetisierungsrichtung M jedes Permanentmagneten 112 in einem Winkel *α* zu der jeweiligen radialen Richtung R geneigt, wobei der Winkel *α* im Bereich zwischen 10 Grad und 170 Grad, bevorzugt zwischen 25 Grad und 155 Grad, liegt.

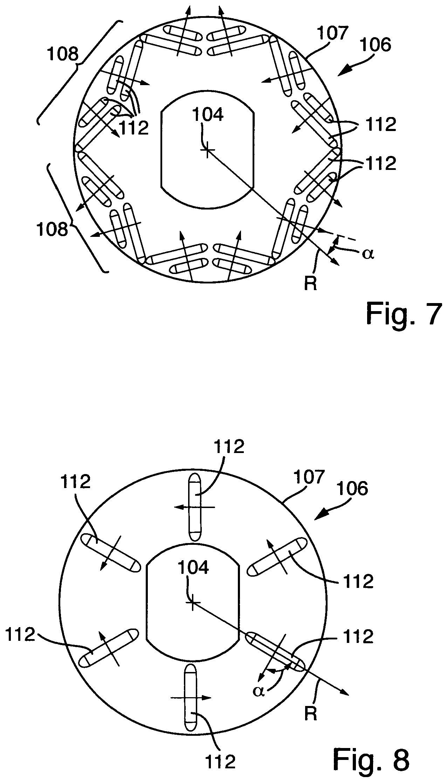

Wie bei der Variante der Fig. 8 gezeigt ist, kann der Winkel *α* auch zumindest annähernd 90 Grad betragen.

Bei den Varianten der Fig. 6 bis 8 kann, wie in Bezug auf die Fig. 2 beschrieben wurde, ebenfalls wenigstens eine Schweißnaht an der Außenseite eines Abschnitts des Kerns 107 angeordnet sein, der zwischen zwei in Drehrichtung des Elektromotor-Rotors 106 benachbarten Permanentmagneten 112 liegt, um das den Kern 107 bildende Blechpaket zusammenzuhalten. Alternativ oder ergänzend können die Bleche des Pakets mittels Backlack miteinander verbackt sein.

Bei der Variante der Fig. 6 ist vorgesehen, dass jeweils zwei in Rotordrehrichtung benachbarte Permanentmagnete 112 einen Rotorpol 108 bilden. Der Elektromotor-Rotor 106 der Fig. 6 ist somit 6-polig. Bei der Variante der Fig. 6 sind die Permanentmagnete 112 eines jeweiligen Pols 108 V-förmig in den Kern 107 eingebettet.

Bei der Variante der Fig. 7 bilden jeweils vier Permanentmagnete 112 einen Rotorpol 108, so dass Fig. 7 ebenfalls einen 6-poligen Elektromotor-Rotor 106 zeigt. Die Permanentmagnete 112 eines Pols 108 sind dabei - in radialer Richtung gesehen - in zwei Schichten V-förmig angeordnet, wie Fig. 7 zeigt.

Durch die V-förmige Anordnung der Permanentmagnete 112 eines jeweiligen Pols 108 kann der Magnetfluss jedes Pols 108 im Luftspalt zwischen dem Elektromotor-Rotor 106 und dem Stator 102 (vgl. Fig. 2) in dem Bereich zwischen den Permanentmagneten 112 konzentriert werden, wodurch die Betriebseigenschaften des Elektromotors weiter verbessert werden können.

Die in Fig. 1 dargestellte Vakuumpumpe 22 ist als Turbomolekularpumpe ausgebildet. Ein Elektromotor mit einem Elektromotor-Rotor gemäß den Fig. 2 bis 8 kann aber auch in anderen Pumpentypen zum Einsatz kommen, zum Beispiel in einer Vorpumpe zu einer Turbomolekularpumpe.

### Bezugszahlen

- 22: Vakuumpumpe
- 24: Einlassflansch
- 26: Pumpeneinlass
- 30: Gehäuse
- 32: Pump-Rotor
- 34: Rotationsachse
- 36: Rotorwelle
- 38: Rotorscheiben
- 40: Statorscheiben
- 42: Abstandsringe
- 44: Rotornabe
- 46: Holweckrotorhülse
- 48: Holweckrotorhülse
- 50: Holweckstatorhülse
- 52: Holweckstatorhülse
- 54: Wälzlager
- 56: Permanentmagnetlager
- 58: Lagerhälfte
- 60: Lagerhälfte
- 62: Magnetring
- 64: Magnetring
- 66: Lagerspalt
- 68: Fanglager
- 70: Spritzmutter
- 72: saugfähige Scheiben
- 74: Motorraum
- 76: Labyrinthdichtung
- 78: Sperrgaseinlass
- 82: Motorstator
- 84: Kern
- 86: Spulen
- 88: Permanentmagnetanordnung
- 90: Motorspalt
- 92: Befestigungshülse
- 94: Kapselung
- 100: Elektromotor
- 102: Stator
- 104: Drehachse
- 106: Elektromotor-Rotor
- 107: Kern
- 107a: Stahlbleche
- 107b: Abschnitt
- 108: Rotorpole
- 109: Schweißnähte
- 110: Aufnahme
- 112: Permanentmagnet
- 114: Außenkontur
- 116: Statorzähne
- 118: Ausnehmung
- 120: Aufnahmeöffnung
- 122: Einschnitte
- 124: Abschnitt
- 126: Anschlag
- 128: Federscheibe
- 130: Schraube
- R: Richtung
- U: Umfangsrichtung
- M: Magnetisierungsrichtung
- *α*: Winkel

## Patentansprüche

1. Vakuumpumpe (22), insbesondere Turbomolekularpumpe oder Vorvakuumpumpe für eine Turbomolekularpumpe, umfassend wenigstens einen Pumpmechanismus (38, 40; 46, 48, 50, 52) zum Pumpen eines Gases durch die Vakuumpumpe (22) mit einem Pump-Rotor und einer Rotorwelle (36) und einen, insbesondere als Synchronmotor ausgebildeten, Elektromotor (100) zum Antreiben des Pumpmechanismus (38, 40; 46, 48, 50, 52), wobei der Elektromotor (100) einen Stator (102) und einen mit dem Stator (102) zusammenwirkenden, um eine Drehachse drehbaren Elektromotor-Rotor (106) aufweist, wobei der Elektromotor-Rotor (106) einen aus wenigstens einem Paket von Stahlblechen (107a) gebildeten Kern (107) und Permanentmagnete (112) aufweist, die um die Drehachse herum im Inneren des Kerns (107) angeordnet sind, wobei der aus dem wenigstens einen Paket aus Stahlblechen (107a) gebildete Kern (107) eine Aufnahmeöffnung (120) für die formschlüssige Aufnahme des Elektromotor-Rotors (106) aufweist, und wobei die Rotorwelle (36) einen Abschnitt aufweist, auf der das wenigstens eine Paket aus Stahlblechen (107a) angeordnet ist, der eine der Aufnahmeöffnung (120) angepasste Form aufweist, und die Aufnahmeöffnung (120) rotationssymmetrisch ausgebildet ist und die Vakuumpumpe **dadurch gekennzeichnet ist, dass** die in dem wenigstens einen Paket aus Stahlblechen (107a) angeordnete Aufnahmeöffnung (120) für die Aufnahme der Rotorwelle (36) eine von einem Vollkreis abweichende Form aufweist, dass die Aufnahmeöffnung (120) eine vieleckige Form aufweist, und dass das wenigstens eine Blechpaket auf der Rotorwelle (36) mit wenigstens einer Feder und/oder wenigstens einer Federscheibe (128) fixiert ist.

2. Vakuumpumpe (22), insbesondere Turbomolekularpumpe oder Vorvakuumpumpe für eine Turbomolekularpumpe, umfassend wenigstens einen Pumpmechanismus (38, 40; 46, 48, 50, 52) zum Pumpen eines Gases durch die Vakuumpumpe (22) mit einem Pump-Rotor und einer Rotorwelle (36) und einen, insbesondere als Synchronmotor ausgebildeten Elektromotor (100) zum Antreiben des Pumpmechanismus (38, 40; 46, 48, 50, 52), wobei der Elektromotor (100) einen Stator (102) und einen mit dem Stator (102) zusammenwirkenden, um eine Drehachse drehbaren Elektromotor-Rotor (106) aufweist, wobei der Elektromotor-Rotor (106) einen aus wenigstens einem Paket von Stahlblechen (107a) gebildeten Kern (107) aufweist, wobei der aus dem wenigstens einen Paket aus Stahlblechen (107a) gebildete Kern (107) eine Aufnahmeöffnung (120) für die formschlüssige Aufnahme des Elektromotor-Rotors (106) aufweist, wobei die in dem wenigstens einen Paket aus Stahlblechen (107a) angeordnete Aufnahmeöffnung (120) für die Aufnahme der Rotorwelle (36) eine von einem Vollkreis abweichende Form aufweist, und dass die Rotorwelle (36) einen Abschnitt aufweist, auf der das wenigstens eine Paket aus Stahlblechen (107a) angeordnet ist, der eine der Aufnahmeöffnung (120) angepasste Form aufweist, wobei der Elektromotor-Rotor (106) Permanentmagnete (112) aufweist, die um die Drehachse herum im Inneren des Kerns (107) angeordnet sind, und dass die Aufnahmeöffnung (120) rotationssymmetrisch ausgebildet ist und wobei die Vakuumpumpe **dadurch gekennzeichnet ist, dass** die Aufnahmeöffnung (120) als wenigstens zweiseitig abgeflachter Kreis ausgebildet ist oder dass die Aufnahmeöffnung (120) als Kreis mit wenigstens zwei Einschnitten (122) ausgebildet ist und dass das wenigstens eine Blechpaket auf der Rotorwelle (36) mit wenigstens einer Feder und/oder wenigstens einer Federscheibe (128) fixiert ist.

3. Vakuumpumpe nach Anspruch 1, **dadurch gekennzeichnet, dass** die vieleckförmige Form der Aufnahmeöffnung (120) abgerundete Ecken aufweist.

4. Vakuumpumpe nach Anspruch 2, **dadurch gekennzeichnet, dass** die Aufnahmeöffnung (120) wenigstens zwei rotationssymmetrisch in der Aufnahmeöffnung angeordnete Passfedernuten (122) aufweist.

5. Vakuumpumpe nach einem der vorhergehenden Ansprüche, **dadurch gekennzeichnet, dass** die Bleche (107a) durch wenigstens eine Schweißnaht (109) und/oder durch Lack zu einem Paket zusammengefügt ausgebildet sind und/oder dass die Bleche (107a) durch Stanzpaketieren zu einem Paket zusammengefügt ausgebildet sind.

6. Vakuumpumpe nach Anspruch 1, **dadurch gekennzeichnet, dass** die wenigstens eine Feder und/oder wenigstens eine Federscheibe (128) durch wenigstens eine rotationssymmetrisch in der Rotorwelle (36) angeordnete Schraube (130) fixiert ist.

7. Vakuumpumpe nach einem der vorhergehenden Ansprüche, **dadurch gekennzeichnet, dass** das wenigstens eine Blechpaket demontierbar auf der Rotorwelle (36) angeordnet ist.

8. Vakuumpumpe nach einem der vorhergehenden Ansprüche, **dadurch gekennzeichnet, dass** die Vakuumpumpe (22) als Scroll-, Schraubenvakuum-, Membran-, Drehschieber-, Hubkolben- oder Wälzkolbenpumpe ausgebildet ist.

## Claims

1. A vacuum pump (22), in particular a turbomolecular pump or a backing pump for a turbomolecular pump, including at least one pump mechanism (38, 40; 46, 48, 50, 52) for pumping a gas through the vacuum pump (22) with a pump rotor and a rotor shaft (36), and an electric motor (100), in particular configured as a synchronous motor, for driving the pump mechanism (38, 40; 46, 48, 50, 52), wherein the electric motor (100) comprises a stator (102) and an electric motor rotor (106) rotating about a rotational axis and co-operating with the stator (102),
wherein the electric motor rotor (106) comprises a core (107) formed of at least one stack of steel sheet members (107a) and permanent magnets (112) which are arranged around the rotational axis in the interior of the core, wherein the core (107) formed of at least one stack of steel sheet members (107a) has a receiving opening (120) for the accommodation with positive locking of the electric motor rotor (106), and
wherein the rotor shaft (36) has a section on which the at least one stack of steel sheet members (107a) is arranged and which has a shape matched to the receiving opening (120), and the receiving opening (12) is formed to be rotationally symmetric and the vacuum pump is **characterised in that** the receiving opening (120), which is for accommodating the rotor shaft (36) and which is arranged in the at least one stack of steel sheet members (107a), has a shape differing from a complete circle, **in that** the receiving opening (120) has a polygonal shape, and **in that** the at least one laminated stack is fixed on the rotor shaft (36) by at least one spring and/or by at least one spring washer (128).

2. A vacuum pump (22), in particular a turbomolecular pump or a backing pump for a turbomolecular pump, including at least one pump mechanism (38, 40; 46, 48, 50, 52) for pumping a gas through the vacuum pump (22) with a pump rotor and a rotor shaft (36), and an electric motor (100), in particular configured as a synchronous motor, for driving the pump mechanism (38, 40; 46, 48, 50, 52), wherein the electric motor (100) comprises a stator (102) and an electric motor rotor (106) rotating about a rotational axis and co-operating with the stator (102), wherein the electric motor rotor (106) comprises a core (107) formed of at least one stack of steel sheet members (107a), wherein the core (107) formed of at least one stack of steel sheet members (107a) has a receiving opening (120) for the accommodation with positive locking of the electric motor rotor (106), wherein the receiving opening (120), which is for accommodating the rotor shaft (36) and which is arranged in the at least one stack of steel sheet members (107a), has a shape differing from a complete circle, and in that the rotor shaft (36) has a section on which the at least one stack of steel sheet members (107a) is arranged and which has a shape matched to the receiving opening (120).
wherein the electric motor rotor (106) comprises permanent magnets (112), which are arranged around the rotational axis in the interior of the core (107), and in that the receiving opening (120) is formed to be rotationally symmetric and wherein the vacuum pump is **characterised in that** the receiving opening (120) is formed as a circle flattened on at least two sides or **in that** the receiving opening (120) is formed as a circle with at least two recesses (122) and **in that** the at least one laminated stack is fixed on the rotor shaft (36) by at least one spring and/or by at least one spring washer (128).

3. A vacuum pump according to claim 1, **characterised in that** the polygonal shape of the receiving opening (120) has rounded off corners.

4. A vacuum pump according to claim 2, **characterised in that** the receiving opening (120) has at least two keyways (122) arranged rotationally-symmetrically in the receiving opening.

5. A vacuum pump according to any one of the preceding claims, **characterised in that** the sheet members (107a) are constructed to be assembled together as a stack by at least one welding seem (109) and/or by lacquer and/or **in that** the sheet members (107a) are constructed to be assembled together as a stack by interlocking.

6. A vacuum pump according to claim 1, **characterised in that** the at least one spring and/or at least one spring washer (128) is fixed by at least one screw (130) arranged rotationally symmetrically in the rotor shaft (36).

7. A vacuum pump according to any one of the preceding claims, **characterised in that** the at least one laminated stack is arranged demountably on the rotor shaft (36).

8. A vacuum pump according to any one of the preceding claims, **characterised in that** the vacuum pump (22) is formed as a scroll-, screw-vacuum-, membrane-, rotary-valve-, reciprocating- or Roots-type-pump.

## Revendications

1. Pompe à vide (22), en particulier pompe turbomoléculaire ou pompe à vide préliminaire pour une pompe turbomoléculaire, comportant au moins un mécanisme de pompe (38, 40 ; 46, 48, 50, 52) servant à pomper un gaz à travers la pompe à vide (22) doté d'un rotor de pompe et d'un arbre de rotor (36) et un moteur électrique (100) réalisé en particulier sous forme de moteur synchrone pour l'entraînement du mécanisme de pompe (38, 40 ; 46, 48, 50, 52), le moteur électrique (100) comprenant un stator (102) et un rotor (106) de moteur électrique coopérant avec le stator (102) et pouvant tourner autour d'un axe de rotation, le rotor (106) de moteur électrique comprenant un noyau (107) formé à partir d'au moins un paquet de tôles d'acier (107a) et des aimants permanents (112) qui sont disposés autour de l'axe de rotation à l'intérieur du noyau (107), le noyau (107) formé à partir dudit au moins un paquet de tôles d'acier (107a) comprenant une ouverture de réception (120) pour la réception par complémentarité de forme du rotor (106) de moteur électrique, et l'arbre de rotor (36) comprenant une partie sur laquelle ledit au moins un paquet de tôles d'acier (107a) est disposé, laquelle partie présente une forme adaptée à l'ouverture de réception (120), et l'ouverture de réception (120) étant réalisée suivant une symétrie de révolution et la pompe à vide étant **caractérisée en ce que** l'ouverture de réception (120) disposée dans ledit au moins un paquet de tôles d'acier (107a) pour la réception de l'arbre de rotor (36) présente une forme différente d'un cercle entier, **en ce que** l'ouverture de réception (120) présente une forme polygonale, et **en ce que** ledit au moins un paquet de tôles est fixé sur l'arbre de rotor (36) à l'aide d'au moins un ressort et/ou d'au moins une rondelle élastique (128).

2. Pompe à vide (22), en particulier pompe turbomoléculaire ou pompe à vide préliminaire pour une pompe turbomoléculaire, comportant au moins un mécanisme de pompe (38, 40 ; 46, 48, 50, 52) servant à pomper un gaz à travers la pompe à vide (22) doté d'un rotor de pompe et d'un arbre de rotor (36) et un moteur électrique (100) réalisé en particulier sous forme de moteur synchrone pour l'entraînement du mécanisme de pompe (38, 40 ; 46, 48, 50, 52), le moteur électrique (100) comprenant un stator (102) et un rotor (106) de moteur électrique coopérant avec le stator (102) et pouvant tourner autour d'un axe de rotation, le rotor (106) de moteur électrique comprenant un noyau (107) formé à partir d'au moins un paquet de tôles d'acier (107a), le noyau (107) formé à partir dudit au moins un paquet de tôles d'acier (107a) comprenant une ouverture de réception (120) pour la réception par complémentarité de forme du rotor (106) de moteur électrique, l'ouverture de réception (120) disposée dans ledit au moins un paquet de tôles d'acier (107a) pour la réception de l'arbre de rotor (36) présentant une forme différente d'un cercle entier, et l'arbre de rotor (36) comprenant une partie sur laquelle ledit au moins un paquet de tôles d'acier (107a) est disposé, laquelle partie présente une forme adaptée à l'ouverture de réception (120), le rotor (106) de moteur électrique comprenant des aimants permanents (112) qui sont disposés autour de l'axe de rotation à l'intérieur du noyau (107), et l'ouverture de réception (120) étant réalisée suivant une symétrie de révolution et la pompe à vide étant **caractérisée en ce que** l'ouverture de réception (120) est réalisée sous forme de cercle aplati au moins des deux côtés ou **en ce que** l'ouverture de réception (120) est réalisée sous forme de cercle présentant au moins deux entailles (122), et **en ce que** ledit au moins un paquet de tôles est fixé sur l'arbre de rotor (36) à l'aide d'au moins un ressort et/ou d'au moins une rondelle élastique (128).

3. Pompe à vide selon la revendication 1, **caractérisée en ce que** la forme polygonale de l'ouverture de réception (120) présente des coins arrondis.

4. Pompe à vide selon la revendication 2, **caractérisée en ce que** l'ouverture de réception (120) comprend au moins deux rainures de clavette parallèle (122) disposées suivant une symétrie de révolution dans l'ouverture de réception.

5. Pompe à vide selon l'une des revendications précédentes, **caractérisée en ce que** les tôles (107a) sont réalisées de manière assemblée en un paquet par au moins un joint de soudure (109) et/ou par un vernis et/ou **en ce que** les tôles (107a) sont réalisées de manière assemblée en un paquet par empilage-découpage.

6. Pompe à vide selon la revendication 1, **caractérisée en ce que** l'au moins un ressort et/ou l'au moins une rondelle élastique (128) sont fixés par au moins une vis (130) disposée suivant une symétrie de révolution dans l'arbre de rotor (36).

7. Pompe à vide selon l'une des revendications précédentes, **caractérisée en ce que** l'au moins un paquet de tôles est disposé de manière démontable sur l'arbre de rotor (36).

8. Pompe à vide selon l'une des revendications précédentes, **caractérisée en ce que** la pompe à vide (22) est réalisée sous forme de pompe scroll, de pompe à vide à vis, de pompe à membrane, de pompe rotative à palettes, de pompe alternative ou de pompe de Roots.
